Europäisches Patentamt

European Patent Office

Office européen des brevets

(19)

(11) Publication number: **0 142 968**
**B1**

# (12) EUROPEAN PATENT SPECIFICATION

(45) Date of publication of patent specification: **18.10.89**

(51) Int. Cl.⁴: **G 11 B 7/24** // G03C1/72

(21) Application number: **84307783.5**

(22) Date of filing: **09.11.84**

(54) Optical recording medium and method of producing same.

(30) Priority: **15.11.83 JP 215489/83**
**24.11.83 JP 221051/83**

(43) Date of publication of application:
**29.05.85 Bulletin 85/22**

(45) Publication of the grant of the patent:
**18.10.89 Bulletin 89/42**

(84) Designated Contracting States:
**DE FR GB**

(56) References cited:
**EP-A-0 121 426**
**EP-A-0 130 755**
**DE-A-2 655 834**
**US-A-4 357 366**

**PROCEEDINGS OF SPIE, OPTICAL STORAGE
MEDIA, 6th-10th June 1983, Arlington,
Virginia, vol. 420, pages 173-177, SPIE-The
International Society for Optical Engineering,
Bellingham, Washington, US; M. TAKENAGA
et al.: "New optical erasable medium using
tellurium suboxide thin film"**

(73) Proprietor: **Matsushita Electric Industrial Co.,
Ltd.**
**1006, Oaza Kadoma**
**Kadoma-shi Osaka-fu, 571 (JP)**

(72) Inventor: **Kimura, Kunio**
**5-1-612 Makinokita-machi**
**Hirakata-shi Osaka 573 (JP)**
Inventor: **Yamada, Noboru**
**1-chome 4-2, Kuzuhaoka**
**Hirakata-shi Osaka 573 (JP)**
Inventor: **Nishiuchi, Kenichi**
**4-49 Satanaka-machi**
**Moriguchi-shi Osaka 570 (JP)**
Inventor: **Takenaga, Mutsuo**
**4-chome 12-305, Ikuno**
**Katano-shi Osaka 756 (JP)**
Inventor: **Ohno, Eiji**
**22-7 Korinishi-no-machi**
**Neyagawa-shi Osaka 572 (JP)**

(74) Representative: **Spencer, Graham Easdale et al
A.A. Thornton & CO Northumberland House
303-306, High Holborn
London WC1V 7LE (GB)**

## Description

The present invention is concerned with an optical recording medium for recording and reproducing information using light, heat or the like, and more particularly with an optical recording medium which can be used to store data for use in a computer and is capable of recording and reproducing information at high speed. The invention also includes methods of making such optical recording media.

The currently available technology for recording and reproducing information by using light or heat energy, such as a laser beam, is based on the use of optical disc systems. As the recording medium for use in such applications, it has been proposed to form on a substrate a thin film composed mainly of a material of the formula $[TeO_x](0<x<2)$.

Optical recording media having a recording layer of the formula $[TeO_x]$ we described, for example, in U.S. Patents 3 971 874 and 4 278 734. U.S. Patent 3 971 874 discloses a recording material having a thin film which is principally formed of a material of the formula $[TeO_x](0<x<2)$. When irradiated with light such as a laser beam, the thin film undergoes a change from a low optical density state to a high optical density state as a result of a temperature increase caused by the absorption of light energy. The information is recorded by this change in state and the recorded information may be reproduced by detecting this change in optical density.

In U.S. Patent 4 278 734, up to 50 mol % of S and/or Se is present in a thin film made of a material of the formula

$$[TeO_x](0<x<2.0) \quad \text{or} \quad [BiO_x](0<x<1.5).$$

When this thin film is irradiated with light, its optical density changes and information is recorded. The recorded information may be erased by irradiating with light of sufficient energy.

Optical recording media containing material of the formula $[TeO_x]$ are found to have excellent humidity resistance and to be stable for a long period of time without deterioration of the recorded information.

The present invention provides a new optical recording medium based on the existing optical recording medium containing material of the formula $[TeO_x]$ and having the advantages stated above, but also having greatly improved recording and reproducing speed and sensitivity so as to be suitable for use as an optical storage medium for computers. When recording computer data in an optical recording medium, for example in an optical recording disc, it is necessary to verify whether the data has been recorded correctly or not immediately after the recording operation. In other words, a high speed response capable of reproducing the recorded information immediately after recording is required. The present invention enables such a high speed response to be achieved.

EP—A—0121426 (published 10.10.84) discloses erasable recording media in which various elements are added to a base of $TeO_x(0<x<2)$. In contrast to the present invention's (write once) type media which are crystalline in the recording state, in erasable type of media, the recording state is amorphous and the erasing state is crystalline. Since it is necessary to melt the recording film using lower power, the number of elements to be added to the $TeO_x$ is reduced as far as possible since the melting point increases with the quantity of alloying additives.

From Proceedings of SPIE—Optical Storage Media, 6—10 June 1983, Vol. 420, pages 173—177, other erasable recording media are known in which small amounts of germanium and tin are incorporated with $TeO_x$. For the reasons set out above the quantities of Ge and Sn are lower than those of the present invention.

According to the present invention, there is provided an optical recording medium which comprises a recording layer comprising oxygen, tellurium, and germanium and tin, in which the proportion of oxygen is from 20 to 60 atom % and the relative proportions of Te, Ge and Sn lie within the polygon GHIJKLMN shown in Figure 2 of the accompanying drawings.

The proportion of oxygen in the recording layer is preferably from 30 to 50 atom %, the thickness of the recording layer is preferably from 50—200 nm (500 to 2000 Å), and on both sides of the recording layer, there is preferably a humidity resistant layer which is transparent to light of wavelength 400 nm to 1000 nm. Silicon dioxide is preferably used for this layer.

The present invention also comprises a method of making an optical recording medium comprising a recording layer comprising oxygen, tellurium, germanium and tin wherein the proportion of oxygen is from 20 to 60 atom % and the relative proportions of Te, Ge and Sn lie within the polygon GHIJKLMN shown in Figure 2 of the accompanying drawings, which method comprises sintering a mixture containing tellurium, germanium and tin, at least one of which metals is present in the form of an oxide thereof, aluminium and, as a solid solution stabiliser, at least one of copper, zinc, iron and nickel, and the coating of a substrate by evaporative deposition using the sintered product as the deposition source.

The content of the solid solution stabiliser is preferably from 5 to 50 wt.%, the weight ratio of the sum of the germanium or oxide thereof and the tin or oxide thereof to aluminium is preferably from 3 to 20, and the weight ratio of the tellurium or oxide thereof to the sum of the germanium or oxide thereof and the tin or oxide thereof is preferably from 0.5 to 2. The mixture is preferably sintered at a temperature of 600 to 720°C and the method of evaporative deposition is suitably resistive heating deposition or electron beam deposition. Of the solid solution stabilisers, copper is the most effective; it is preferably added in a proportion of from 10 to 40 wt.%.

An optical recording medium according to the present invention has the following advantages:

(1) It responds very rapidly to irradiation with light. By making the thin film sensitive to a laser beam or similar, recording may be completed in less than 40 nsec.

(2) The signal quality is high. When reproducing the recorded information by laser beam, the difference in reflectivity $\Delta R$ between the unrecorded and recorded areas is extremely large, over 25%, and optical recording of high quality is achieved.

Furthermore, the following advantages are obtained by the present method of producing an optical recording medium by using the sintered product as the sole deposition source:

(1) The reproducibility of recording layer characteristics is excellent.

(2) Variation in the composition of the recording layer is negligible.

(3) There is no drop-out due to sudden boiling.

(4) Deterioration of the recording layer caused by humidity is minimal.

(5) Control of the characteristics and rate of deposition of the recording layer are easier.

For a better understanding of the invention, reference will be made in the following description to the accompanying drawings, in which:

Figure 1 is a sectional view of an optical recording medium according to one of the embodiments of the present invention;

Figure 2 is a ternary composition diagram showing the relative proportions of Te, Ge and Sn in the optical recording layer;

Figure 3 is a sectional view of an electric furnace for producing the sintered product which is used in the production of the optical recording medium;

Figure 4 is a sectional view of a deposition apparatus for producing an optical recording medium using the sintered product;

Figure 5 is a graph representing the spectral reflectivity of the optical recording medium;

Figure 6 is a graph showing the result of humidity resistance tests on the optical recording medium;

Figure 7 is a graph demonstrating the difference in the humidity resistance characteristics of the optical recording medium arising from differences in the method of deposition of the photosensitive layer; and

Figure 8 is a schematic diagram of an apparatus for recording and reproducing information signals on to and from the optical recording medium.

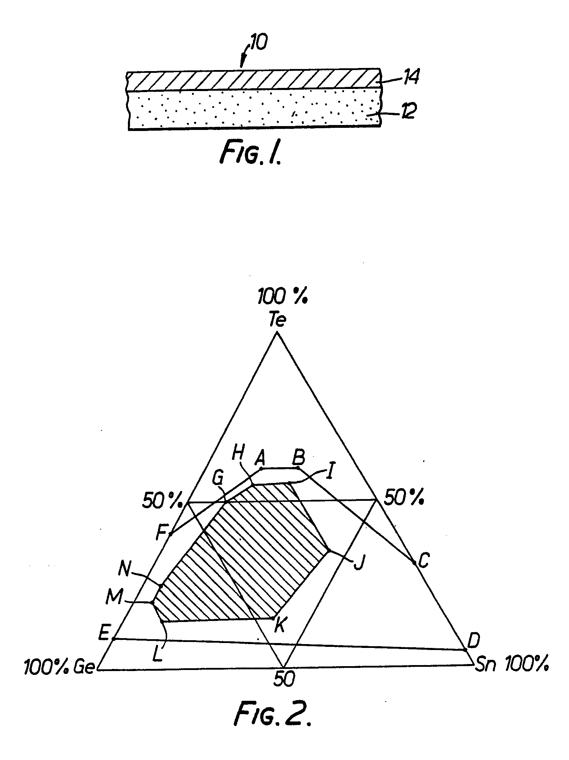

The invention is further described below with reference to Figure 1. In this Figure, an optical recording medium, 10, comprises a substrate 12 and a photosensitive layer 14. Materials which may be used as the substrate 12 include, for example, aluminium, copper, or other metals, quartz, glass, ABS resin, polystyrene, acryl (PMMA; polymethylmethacrylate), polycarbonate, vinyl chloride, or other synthetic resins, or acetate, PTFE (polytetrafluoroethylene), polyester, or other transparent films. In particular, when polyester film or PMMA sheet is used, the transparency is excellent and very effective when optically reproducing a recorded signal image. The thin film recording layer 14 is formed on this substrate 12 by evaporative deposition, using one or more deposition sources in a vacuum system.

The photosensitive layer 14 comprises oxygen, Te, Ge and Sn. The proportion of oxygen is from 20 to 60 atom %; the relative proportions of Te, Ge, and Sn lie within the polygon ABCDEF shown in Figure 2, the coordinates of which are as follows, expressed as atomic %'s of Te, Ge, and Sn respectively:

A=(60, 25, 15)
B=(60, 15, 25)
C=(30, 0, 70)
D=(5, 0, 95)
E=(10, 90, 0)
F=(40, 60, 0)

An optical recording layer of this composition responds very rapidly to irradiation with light. In addition, the difference in reflectivity $\Delta R$ between the recorded and unrecorded areas of the medium is extremely large, more than 25%, so that high quality reproduction is achieved. Recording layers of the invention with compositions in the polygon GHIJKLNM, within the polygon ABCDEF, have a particularly fast response speed and response sensitivity is higher, so that an optical recording medium capable of responding to light pulses of 40 nsec or less is obtained. The coordinates of polygon GHIJKLMN are as follows, expressed as atomic %'s of Te, Ge and Sn respectively:

G=(50, 40, 10)
H=(55, 30, 15)
I=(55, 20, 25)
J=(35, 20, 45)
K=(15, 45, 40)
L=(15, 75, 10)
M=(20, 75, 5)
N=(25, 70, 5)

In the optical recording layer 12, oxygen may be present as $TeO_2$, $GeO$, $SnO$, or $SnO_2$, while Te, Ge and Sn are apparently present as amorphous forms of Te, GeTe and SnTe. Optical density changes caused by illumination with a laser beam appear to be mainly due to the transition of amorphous Te, GeTe and SnTe into crystalline forms.

The Te, Ge, Sn, and O present in the optical recording layer 12 have their own roles and their combined characteristics are exhibited only when their relative proportions are as defined earlier. The roles of O, Sn, Ge, and Te are described in detail below.

(1) Role of oxygen

It is believed that oxygen forms oxides with the Te, Ge and Sn in the film. These oxides—$TeO_2$, $GeO_x$, $SnO_x$—are effective in stabilising chalcogenides composed of Te, Ge, Sn, etc., in an amorphous state in the recording layer. Also the presence of these oxides in intimate association with the chalcogenides tends to inhibit oxidation of the recording layer caused by water. As a result, the oxygen improves both the thermal stability and humidity resistance of the recording layer.

However, the characteristics attributed to the presence of oxygen vary according to its concentration. The proportion of oxygen in the recording layer 14 therefore is limited to a range of 20 to 60 atom %. At less than 20 atom %, the chalcogenides do not exist in a stable amorphous state and the layer is unstable to heat and humidity. At more than 60 atom %, the layer is stable to heat and humidity, but the absolute volume of chalcogenides is small and insufficient optical density change is obtained on illumination.

(2) Role of Sn

The presence of tin in the recording layer, serves to increase the rate of transition of Te from an amorphous state to a crystalline state by acting as a crystal nucleus. When the concentration of Sn is low, the transition time is longer. If the concentration of Sn is excessive, the proportions of Te and O are decreased and the optical density change obtained on illumination is insufficient. The appropriate concentration of Sn in relation to the concentrations of Te and Ge has been determined and is limited to those values which lie within the polygon GHIJKLMN shown in Figure 2.

(3) Role of Ge

One of the roles of Ge is to act as a crystal nucleus during crystallization of Te, in the same way as Sn. In addition, Ge is effective in forming a more stable amorphous form of Te and thereby raising the temperature of transition to the crystalline state.

As a result, the thermal stability of the film is improved and the life of the recording layer is extended.

(4) Role of Te

Tellurium is the principal element responsible for producing optical density changes in the recording layer. On its own, Te cannot exist in a stable amorphous state, but it becomes stable and amorphous when in the form of a chalcogenide with Ge or Sn in a matrix of oxides.

As stated earlier, the thin film recording layer 14 is formed on the substrate 12 by evaporative deposition. As a first step in this procedure, deposition sources are prepared. As a source of Te and, optionally, oxygen, either elemental Te or $TeO_2$, or both of them, are used; as a source of Ge and, optionally, oxygen, either elemental Ge or $GeO_2$, or both of them, are used; and as a source of Sn and, optionally, oxygen, either elemental Sn or $SnO_2$, or both of them, are used. In order that oxygen is always present in the film, at least one of $TeO_2$, $GeO_2$, and $SnO_2$ must be used. In one way of carrying out the process of evaporative deposition, each source is put in a quartz container, the outer wall of which is heated by a tungsten-made coil heater. Alternatively, the container may be heated directly by electron beams. The rate of evaporation from each source is detected by an appropriate sensor and may be varied by controlling the heater current or the intensity of the electron beams. The materials evaporated from the sources are deposited on a substrate to form a thin recording film.

An optical recording medium with a recording layer composed of Te-Ge-Sn-O may be produced by such a deposition method using a plurality of deposition sources, but it is also possible to obtain the same recording layer of Te-Ge-Sn-O by using only one source, and described below.

The main feature of this one source method of producing an optical recording medium is that a sintered product of the appropriate composition is used as the deposition source. The sintered product comprises oxygen, tellurium, germanium, tin, aluminium, and, as a solid solution stabiliser, at least one of copper, zinc, iron, and nickel.

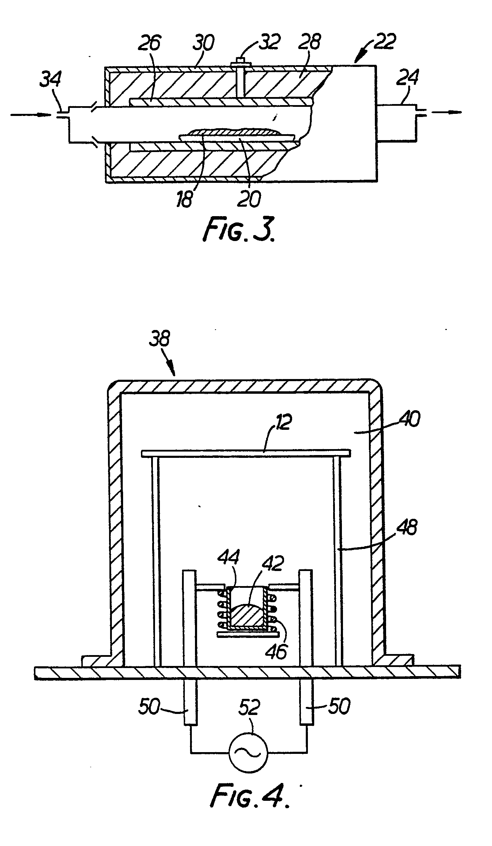

Figures 3 and 4 show embodiments of the process for forming a thin film recording layer 14 using this sintered product. In the first process (Figure 3), a mixture containing tellurium, germanium and tin, at least one of which metals is present in the form of an oxide thereof, aluminium, and, as a solid solution stabiliser, at least one of copper, zinc, iron and nickel, is put in a mortar and mixed well. A ball mill may be used for this purpose. Uniform mixing is easier when alcohol, acetone or a similar solvent is added to the mixture. The mixed powder 18 is dried, put in a quartz boat 20, and heated in an electric furnace 22. The electric furnace 22 comprises a quartz core tube 24, heater 26, insulating material 28, outer wall 30, and thermocouple 32. The heat treatment is effected in an inert gas atmosphere such as nitrogen or argon, which is introduced through an inlet 34 and exhausted through an outlet 36.

As when using a plurality of deposition sources, the source of tellurium may be any capable of forming an amorphous state of Te, [$TeO_x$] or Te alloy in the recording layer 14. Tellurium dioxide or elemental Te are

EP 0 142 968 B1

preferred for optimum stability of the characteristics of the recording layer. The sources of germanium and tin may be any materials capable of forming Ge, Sn or their oxides in the recording layer, preferably elemental Ge and Sn, $GeO_2$, $SnO_2$, and SnO. It is also possible to use compounds of tellurium and germanium, or tellurium and tin, for example, GeTe, or SnTe. Again, at least one of $TeO_2$, $GeO_2$ and $SnO_2$ must be used to provide oxygen.

Aluminium plays an important role in reducing the oxide(s) of tellurium, germanium and tin, thereby producing the desired composition of recording layer. As mentioned earlier, the proportion of oxygen in the recording layer greatly affects its optical characteristics and humidity resistance. It is, therefore, important to control the proportion of oxygen in the recording layer and this will be dependent on the nature and relative proportions of the Te, Ge and Sn components in the mixture. Since the reducing ability of aluminium is greater than that of Ge or Sn and reduction is stopped by the heat treatment of the raw materials, it is possible to evaporate the stable sintered product with high reproducibility.

Although reduction of the oxide(s) is performed primarily by aluminium, if the Ge and Sn are present in the mixture and metals, they also reduce oxides to give $GeO_2$ and $SnO_2$, the concentration of elemental Ge and Sn in the film is reduced and the optical density decreases. Hence the preferred content of aluminium in the mixture is determined by its ratio to the sum of the Ge component and the Sn component. In the present invention, this ratio, that is, the preferred weight ratio of the sum of the germanium or oxide thereof and the tin or oxide thereof to aluminium is from 3 to 20. If the ratio is less than 3, the Ge and Sn components reduce the tellurium oxide and do not get into the film in the form of elemental Ge and Sn, thereby reducing the optical density. If the ratio is greater than 20, the proportion of oxygen in the film is reduced and the optical density is increased, but the humidity resistance is lowered.

The relative proportions of the tellurium component, germanium component and tin component in the mixture is also important for the preparation of satisfactory recording of layers; the preferred weight ratio of the tellurium or oxide thereof to the sum of the germanium or oxide thereof and the tin or oxide thereof is from 0.5 to 2. Only mixtures with compositions within this range produced films of satisfactory Te-Ge-Sn composition for use as optical recording media.

In addition to the basic raw materials, a solid solution stabiliser is used in the preparation of the sintered product in order to improve its uniformity. This stabilizer is added to the raw materials before heat treatment and improves the reproducibility of deposition of the sintered product, but it is not an indispensable element for the composition of the recording layer. As the solid solution stabiliser, at least one of copper, zinc, iron and nickel is used. These metals have weaker reducing abilities than aluminium, and are partly fusible at heat treatment temperature to form a uniform sintered product. Of the four metals, copper is preferred. The proportion of stabilizer used is from 5 to 50 wt.%. If less than 5 wt.% is used, the sintered product obtained is not uniform; if more than 50 wt.% is used, the content of raw materials forming the Te-Ge-Sn-O thin film is reduced and the stabiliser metal becomes incorporated in the thin film, which is undesirable. The optimum loading is from 10 to 40 wt.%.

To prepare the deposition source, the raw materials are weighed and mixed together in the presence of acetone or alcohol. After mixing, the dried mixture is put in a quartz boat or similar and heated in an inert atmosphere, such as nitrogen, to form a sintered product. The preferred temperature for sintering is from 600 to 720°C. At temperatures below 600°C, the reducing ability of aluminium is decreased; at temperatures above 720°C, undesirable evaporation of elemental tellurium occurs.

The sintered product may be used directly as the deposition source or it may be crushed and formed into pellets suitable for use as deposition sources. Deposition is effected either by resistive heating deposition or by electron beam deposition. Figure 4 shows a deposition apparatus 38 using resistive heating deposition. The pressure in the chamber 40 may be from $133,3 \cdot 10^{-3}$ Pa ($10^{-3}$ mmHg) to $133,3 \cdot 10^{-7}$ Pa ($10^{-7}$ mmHg) but a strong film with high adhesion is not obtained at pressures of greater than $133,3 \cdot 10^{-5}$ ($10^{-5}$ mmHg). Deposition pellets 42 prepared from the sintered product obtained by heat treatment are put in a quartz container 44 and externally heated by a coil heater 46; a thin film recording layer 14 is formed on the substrate 12 placed on a support stand 48. The heater temperature should be from 500° to 1,000°C, so that the rate of deposition and film composition may be controlled. The coil heater 46 is connected to an external power supply 52 through electrodes 50.

The method of deposition by sudden and local heating using electron beams is, compared with the method of using a heater, found to give (a) less variation in the composition of the film because the temperature of the deposition source can be increased rapidly and locally instead of heating the entire deposition source with the heater, (b) quicker response so that control of the rate of deposition is easier, and (c) improved humidity resistance in the resultant film, as described below. The recording layer prepared using a sintered body, compared with that obtained using a plurality of sources, is denser in texture and hence less susceptible to the effects of humidity. Thus in a recording layer obtained by electron beam deposition from a single source, deterioration caused by humidity is minimal.

Although the composition of the recording layer of the present invention consists of at least Te-Sn-Ge-O, small amounts of additives may be present in the basic composition in order to alter its properties as desired. In such cases, however, the relative proportions of the basic components in the mixture must be maintained in the ranges specified above.

The recording layer obtained by this method is a thin membrane having a pale yellowish or pale brownish translucent colour; the film thickness is preferably from 50—200 nm (500 to 2000 Å). Within this

5

range, the difference in the optical density of the film before and after recording, that is, the difference in transmittance and reflectivity is substantial.

To record information on to the thin film recording layer, any means of illumination, such as a Xe flashlamp, He-Ne laser beam, semiconductor laser beam, or infrared ray lamp may be used. It has been found that the recording layer of this invention responds to a wide range of types of irradiation, from continuous lighting by infrared ray lamp to laser pulsive light of about 10 nsec deviation, with a resultant increase in the optical density.

A humidity resistant layer may also be provided on the recording layer in order to improve the humidity resistance. For this layer, a film which is transparent to the wavelengths of a semiconductor laser, that is, over the range 400 nm to 1000 nm, is required in order to be able to record and reproduce satisfactorily; a thin film of oxide, preferably silicon dioxide, is found to be effective.

In order that the invention may be more fully understood, the following examples are given by way of illustration only.

Example 1

TeO$_2$, Te, Ge, Sn were used as the deposition sources. The deposition rates were monitored by a quartz oscillator type film thickness gauge and were 0.1, 0.1, 0.2 and 0.2 nm/sec (1 Å/sec, 1 Å/sec, 2 Å/sec, and 2 Å/sec) respectively. The deposition method was electron beam heating. A recording layer of Te-Sn-Ge-O of about 100 nm (1000 Å) thickness was formed on a disc-shaped substrate, 200 mm in diameter, which was made of PMMA (polymethylmethacrylate) resin and rotating at a speed of 150 rpm. The composition of the recording layer was analysed by Auger spectroscopy and found to be Te$_{30}$Ge$_{20}$Sn$_{15}$O$_{35}$.

The recording layer obtained by this method was a pale brownish colour. When this film was illuminated with light pulses from a semiconductor laser of $\lambda$=830 nm by focusing the beam into a spot of about 0.8 μm at a laser power of 7 mW and varying the exposure time from 10 to 200 nsec, recording was completed in real-time with respect to each light pulse and it was noticeable that the film darkened. The recorded area could be detected by weakening the same semiconductor laser beam and detecting the reflected light.

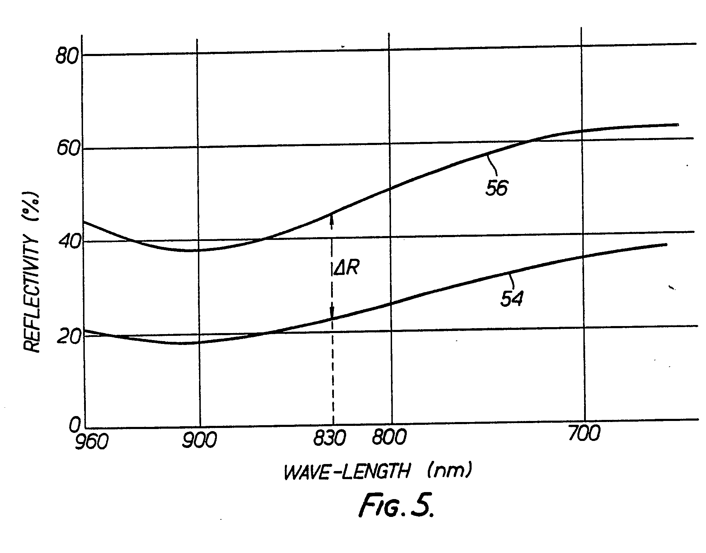

Figure 5 shows the spectral reflectivity curve of this recording layer; curve 54 corresponds to the initial unrecorded state and curve 56 to the recorded state darkened by the laser. At a laser wavelength of 830 nm, the difference $\Delta R$ in reflectivity between the unrecorded and recorded areas of the disc was as much as 25%.

Example 2

TeO$_2$, Te, Ge, Sn were used as the deposition sources and Te-Ge-Sn-O thin films of various compositions were obtained by varying the deposition rates of the sources. When these thin films were illuminated with a semiconductor laser beam for 40 nsec, the recording was completed in realtime for those films with compositions lying within the polygon ABCDEF in Figure 2 in which the proportion of oxygen was from 20 to 60% atom %. In the region "above" the polygon, a slight time delay was observed till completion of recording. In the region "below" the polygon, the absorption of light was insufficient and the recording sensitivity low.

The best results were obtained from films with compositions lying in the polygon GHIJKLMN, within the polygon ABCDEF; the response speed was particularly fast and the films responded satisfactorily to a light pulse of less than 40 nsec duration.

The coordinates of points A to N were as follows.

(Te, Ge, Sn) %
A: 60, 25, 15
B: 60, 15, 25
C: 30, 0, 70
D: 5, 0, 95
E: 10, 90, 0
F: 40, 60, 0
G: 50, 40, 10
H: 55, 30, 15
I: 55, 20, 25
J: 35, 20, 45
K: 15, 45, 40
L: 15, 75, 10
M: 20, 75, 5
N: 25, 70, 5

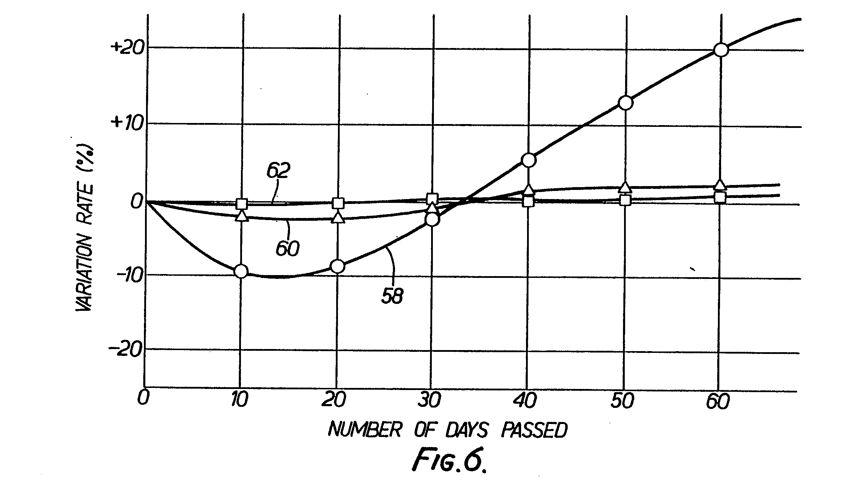

Figure 6 shows the results of heat resistance and humidity resistance tests at 45°C and 85% relative humidity; curve 58 represents the relative transmission $T/T_o$ (where $T$ is transmission and $T_o$ is initial transmission) of a film of composition O$_{20}$Te$_{28}$Ge$_{26}$Sn$_{26}$, curve 60 is for O$_{30}$Te$_{22}$Ge$_{24}$Sn$_{24}$, and curve 62 is for O$_{40}$Te$_{20}$Ge$_{20}$Sn$_{20}$. From these results, it was found that the humidity resistance is significantly reduced when the proportion of oxygen in the film is less than 20 atom %. By comparison, when similar humidity tests were conducted on films formed of O$_{60}$Te$_{20}$Ge$_{10}$Sn$_{10}$ (using TeO$_2$, Ge, Sn as deposition sources) and

$O_{62}Te_{25}Ge_5Sn_8$ (using $TeO_2$, $GeO_2$, Sn as deposition sources), similar results to those shown by curve 62 in Figure 6 were obtained. However, compared with the film obtained in Example 1, the spectral reflectivity curve of which is shown in Figure 5, the difference in reflectivity $\Delta R$ between unrecorded and recorded areas was considerably reduced, being 15% and 7% respectively; the film containing oxygen at 62 atom % was particularly unsatisfactory. When the proportion of oxygen was from 20 to 60 atom %, both the humidity resistance and recording sensitivity were satisfactory. In particular, when the proportion of oxygen was from 30 to 50 atom %, both the humidity resistance and recording sensitivity were excellent.

Example 3

A mixture of the following materials and proportions was prepared using a small portion of alcohol.

$TeO_2$: 43 wt.%
Ge: 12 wt.%
Sn: 12 wt.%
Al: 3 wt.%
Cu: 30 wt.%

Exactly 100 g of the dried powder was put in a quartz boat and heated in an electric furnace 22 as shown in Figure 3. The material was put in a core tube 24 and whe furnace temperature gradually raised to 700°C in about 30 minutes, while passing nitrogen gas at a flow rate of about 2 litres/hour from the gas inlet 24 to the gas outlet 36. After maintaining this temperature for about two hours, the material was drawn into the cold part of the furnace and allowed to cool. When it was removed from the furnace an hour later, the sintered product was obtained as a dark brown glass. This solid was taken out of the quartz boat and part of it was used as a source for evaporative deposition using the apparatus shown in Figure 4. About 200 mg of small lumps of the solid was put in a quartz container 44 and heated at a temperature of 700°C at a pressure of $133,3 \cdot 10^{-5}$ Pa ($10^{-5}$ Torr). A brown transparent $[TeO_x]$ film with a slight yellowish tint and a thickness of about 120 nm (1200 Å) formed on a PMMA substrate. When this film was illuminated with a semiconductor laser beam of $\lambda=900$ nm focused through an optical system, the illuminated area darkened.

Example 4

TABLE 1

| Composition in wt.% | 1 | 2 | 3 | 4 | 5 |
|---|---|---|---|---|---|
| $TeO_2$ | 40 | 40 | — | 30 | 38 |
| Te | — | — | 20 | — | |
| $GeO_2$ | 15 | — | 20 | 15 | |
| Ge | — | 12 | — | — | 15 |
| $SnO_2$ | — | 15 | 20 | 15 | — |
| Sn | 12 | — | — | — | 10 |
| Al | 5 | 5 | 5 | 10 | 7 |
| Cu | 28 | 28 | 28 | 30 | 30 |

Using the compositions 1 to 5 shown in Table 1, film samples were prepared by the method described in Example 3 and then evaluated. All the samples darkened on illumination.

Example 5

By varying the proportion of copper stabiliser from 0 to 60 wt.% (0, 5, 10, 20, 40, 50, 60 wt.%) and maintaining the relative proportions of $TeO_2$, Ge, Sn and Al at a ratio of 40:10:12:5, samples of sintered product were prepared by the method described in Example 3; uniform dark brown samples were obtained from mixtures containing 5 to 50 wt.% of copper. When the sintered products were used to prepare films by the method described in Example 1, samples containing less than 5 wt.% of copper gave recording layers of very low optical densities and the changes in optical density obtained on illumination with a semiconductor laser beam were not satisfactory. When the proportion of copper was over 50 wt.%, the optical density was increased, but the film was unstable and the brown transparent film fresh from deposition soon began to change at room temperature into an opaque, slightly metallic black film. When the proportion of copper was from 5 to 50 wt.%, preferably 10 to 40 wt.%, stable recording layers of a transparent brown colour with a yellowish tint were obtained, which darkened on illumination with a semiconductor laser beam. Analysis of the composition of the films by Auger spectroscopy revealed that there was almost no local variation in the composition of each film and the texture was homogeneous.

Example 6

Instead of using copper as the solid state stabiliser, as in Example 3, zinc, iron, or nickel was used in this Example. Also, material of 20 atom % copper and 10 atom % zinc, and material of 10 atom % copper, 10 atom % zinc and 10 atom % iron were used in this Example. In all cases, brown or black sintered products were obtained. Each sample was evaporated by the method described in Example 3 and the resultant films evaluated. In each case, the film darkened when illuminated with a laser beam. Analysis of the composition of the films by Auger spectroscopy showed that there was no local variation in the composition of each film, but they were generally inferior to the films obtained in Example 3 using copper as the solid state stabiliser.

Example 7

The sintered product obtained in Example 3 was crushed into powder. About 2 g of this powder was pressed and shaped at a pressure of $5 \times 10^3$ kg/cm² (5 tons/cm²) into a pellet of 20 mm diameter and about 15 mm thickness.

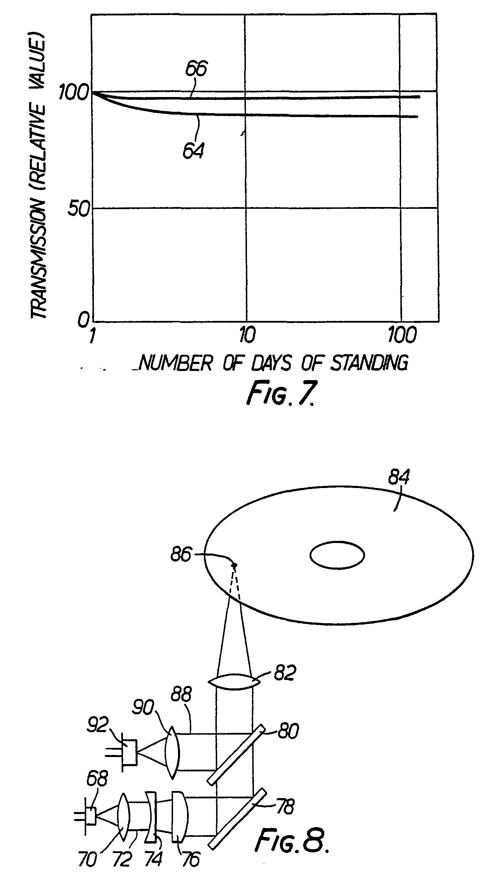

When such pellets were evaporated and deposited onto a Pyrex (Trade Mark of Corning Glass Works) substrate in an apparatus of the type shown in Figure 4 by heating with (a) a heater and (b) electron beams, slightly yellowish brown thin films of Te-Ge-Sn-O were obtained in both cases. When these two thin films were put in a thermostatic oven controlled at 50°C and 90% relative humidity and the transmission of each film was measured periodically (Figure 7), the transmission of the film prepared using electron beams (curve 66) was found to change less than that of the film prepared using the heater (curve 64) and was found to be less susceptible to the effects of humidity and temperature.

Example 8

Using pellets of compositions 5 in Example 3 as the deposition source and electron beam heating, an optical disc was prepared with a recording layer of Te-Ge-Sn-O of about 120 nm (1200 Å) thickness deposited at a rate of 0.3 nm/sec (3 Å/sec) on a PMMA substrate of 1.1 mm thickness and 200 mm diameter, rotating at a speed of 150 rpm.

The disc was used in experiments to record and reproduce information using an optical recording and reproducing apparatus of the type shown in Figure 8. The light emitted from a semiconductor laser 68 is collimated by a lens 70 into a beam 72, which is then shaped into a round cross-section by a second lens 74, then restored to a parallel beam by a third lens 76 and finally focused on to the disc 84 as a tiny spot 86 of about 0.8 μm diameter by means of a fourth lens 82 and half mirrors 78 and 80. The area of the recording film which is illuminated with the spot darkens and thereby records the information. In this way, by modulating the semi-conductor laser, various information signals may be recorded on the disc as areas of darkened film.

To detect the recorded information signals, the light 88 reflected from the disc surface 84 is reflected by the half mirror 80, focused through a lens 90, and detected by the photosensitive diode 92.

The semiconductor laser beam, at a power of 8 mW, was modulated at a single frequency of 5 MHz to illuminate the disc rotating at 1800 rpm and information was recorded. The C/N value was measured using a spectrum analyzer and found to be 57 dB.

Example 9

Using TeO₂, Ge, Sn, Al, Cu as raw materials, pellets were prepared by the method used in Example 7. The whole weight of the sample was 26 g, which consisted of 1.27 g of Al, 7.80 g of Cu, and various amounts of TeO₂, Ge, and Sn.

Optical discs were prepared by the method described in Example 8, using the same substrate and deposition conditions. The discs were then evaluated and the results are shown in Table 2. The C/N value was measured by the method used in Example 8 and the high speed response performance was evaluated by observing any changes in the C/N value with the passing of time—the o-mark was given when there was no difference between the value obtained immediately after recording and that measured two minutes later, the Δ-mark was given when there was a change of less than 1 dB, and the x-mark was given when the change was 1 dB or more.

EP 0 142 968 B1

TABLE 2

|  | TeO$_2$ | Ge | Sn | TeO$_2$/(Ge+Sn) | C/N(dB) | High speed response |
|---|---|---|---|---|---|---|
| 1 | 5.43 g | 4.37 g | 7.13 g | 0.47 | 42 | o |
| 2 | 5.64 | 4.42 | 6.87 | 0.50 | 45 | o |
| 3 | 5.99 | 3.81 | 7.13 | 0.54 | 50 | o |
| 4 | 6.11 | 4.45 | 6.36 | 0.56 | 53 | o |
| 5 | 7.06 | 3.75 | 6.12 | 0.72 | 57 | o |
| 6 | 8.09 | 3.68 | 5.16 | 0.92 | 58 | o |
| 7 | 10.21 | 1.39 | 5.32 | 1.55 | 58 | o |
| 8 | 11.07 | 1.37 | 4.49 | 1.89 | 56 | o |
| 9 | 11.31 | 2.53 | 3.09 | 2.01 | 50 | Δ |
| 10 | 11.46 | 2.37 | 3.10 | 2.09 | 51 | Δ |
| 11 | 11.67 | 2.89 | 2.37 | 2.21 | 52 | x |

It is clear from Table 2 that when the ratio TeO$_2$/(Ge+Sn) is less than 0.5, the high speed response is satisfactory, but the C/N value is low. When the ratio is larger than 2, the C/N value is 50 dB or more, but the high speed response is poor. The preferred ratio for TeO$_2$/(Ge+Sn) is therefore from 0.5 to 2.0.

Example 10

Using TeO$_2$, Ge, Sn, Al as raw materials, pellets were prepared by the method described in Example 7. The total weight of the sample was 26 g, which consisted of 7.80 g of copper and various amounts of TeO$_2$, Ge, Sn and Al. Optical discs were prepared by the method described in Example 8, except that a glass substrate (18×18×0.2 mm) for evaluation of humidity resistance was used in addition to the PMMA substrate. The discs were then evaluated and the results are shown in Table 3. The C/N value was measured by the method used in Example 8. To evaluate the humidity resistance, the thin film deposited on the glass substrate was put directly into a thermostatic oven controlled at 60°C and 90% relative humidity for ten consecutive days and then taken out and observed microscopically. The o-mark was given when there was no change in the condition of the film after ten days' exposure, the Δ-mark was given when partial dot patterns appeared, and the x-mark was given when dot patterns appeared over the entire surface of the film.

9

# EP 0 142 968 B1

TABLE 3

| | TeO$_2$ | Ge | Sn | Al | (Ge+Sn)Al | C/N | Humidity resistance |
|---|---|---|---|---|---|---|---|
| 1 | 12.07 | 1.69 | 2.07 | 2.37 | 1.59 | 54 | x |
| 2 | 11.31 | 1.72 | 2.80 | 2.37 | 1.91 | 54 | x |
| 3 | 11.09 | 2.29 | 3.00 | 1.82 | 2.91 | 55 | x |
| 4 | 10.59 | 2.85 | 3.10 | 1.98 | 3.01 | 56 | Δ |
| 5 | 10.24 | 2.33 | 3.81 | 1.82 | 3.37 | 54 | o |
| 6 | 11.07 | 1.37 | 4.49 | 1.27 | 4.61 | 56 | o |
| 7 | 7.93 | 3.09 | 5.90 | 1.27 | 7.08 | 57 | o |
| 8 | 7.21 | 3.83 | 6.26 | 0.91 | 11.09 | 58 | o |
| 9 | 8.44 | 3.84 | 5.38 | 0.55 | 16.76 | 55 | o |
| 10 | 7.36 | 3.91 | 6.39 | 0.55 | 18.7 | 52 | o |
| 11 | 8.12 | 4.21 | 5.39 | 0.48 | 20.0 | 43 | o |
| 12 | 10.15 | 4.18 | 3.52 | 0.35 | 22.0 | 35 | o |

It is clear from Table 3 that when the ratio (Ge+Sn)/Al is less than 3, the C/N value is satisfactory (more than 50 dB), but the oxygen content of the film is reduced and the humidity resistance is therefore poor.

When the ratio is larger than 20, the humidity resistance is excellent, but the C/N value is worse (less than 50 dB). To satisfy both recording characteristics and humidity resistance, the preferred ratio for (Ge+Sn)/Al is therefore from 3 to 20.

**Claims**

1. An optical recording medium which comprises a recording layer comprising oxygen, tellurium, and germanium and tin, characterised in that the proportion of oxygen is from 20 to 60 atom % and in that the relative proportions of Te, Ge and Sn lie within the polygon GHIJKLMN shown in Figure 2 of the accompanying drawings.

2. An optical recording medium according to claim 1, in which the proportion of oxygen is from 30 to 50 atom %.

3. An optical recording medium according to either claim 1 or claim 2, in which the thickness of recording layer is from 50 to 200 (500 to 2,000 Å).

4. An optical recording medium according to any of claims 1 to 3, in which humidity resistant layers that are transparent to light having a wavelength of from 400 to 1,000 nm are provided on both surfaces of the recording layer.

5. An optical recording medium according to claim 4, in which the transparent humidity resistant layers are formed of silicon dioxide.

6. A method of making an optical recording medium as claimed in claim 1 and comprising a recording layer comprising oxygen, tellurium, germanium and tin wherein the proportion of oxygen is from 20 to 60 atom % and the relative proportions of Te, Ge and Sn lie within the polygon GHIJKLMN shown in Figure 2 of the accompanying drawings, which method comprises sintering a mixture containing tellurium, germanium, and tin, at least one of which metals is present in the form of an oxide thereof, aluminium and, as a solid solution stabiliser, at least one of copper, zinc, iron and nickel, and the coating of a substrate by evaporative deposition using the sintered product as the deposition source.

7. A method according to claim 6, in which the oxide is tellurium dioxide, germanium oxide, or tin oxide.

8. A method according to claim 6 or 7, in which the mixture contains 5 to 50% by weight of the solid solution stabiliser.

9. A method according to any of claims 6 to 8, in which the mixture contains 10 to 40% by weight of the solid solution stabiliser.

10

10. A method according to any of claims 6 to 9, in which the weight ratio of the sum of the germanium or oxide thereof and the tin or oxide thereof to aluminium, in the mixture, is from 3 to 20.

11. A method according to any of claims 6 to 10, in which the weight ratio of the tellurium or oxide thereof to the sum of the germanium or oxide thereof and the tin or oxide thereof, in the mixture, is from 0.5 to 2.

12. A method according to any of claims 6 to 11, in which the mixture is sintered at a temperature of from 600° to 720°C.

13. A method according to any of claims 6 to 12, in which the evaporative deposition of the sintered product is effected by resistive heating or electron beam deposition.

**Patentansprüche**

1. Optisches Aufzeichnungsmedium, das eine Aufzeichnungsschicht, umfassend Sauerstoff, Tellur und Germanium und Zinn, umfaßt, dadurch gekennzeichnet, daß der Anteil an Sauerstoff 20 bis 60 Atom% beträgt und daß die relativen Anteile an Te, Ge und Sn innerhalb des Polygons GHIJKLMN, das in Fig. 2 der beigefügten Zeichnungen gezeigt wird, liegen.

2. Optisches Aufzeichnungsmedium nach Anspruch 1, worin der Anteil an Sauerstoff 30 bis 50 Atom% beträgt.

3. Optisches Aufzeichnungsmedium nach Anspruch 1 oder 2, worin die Dicke der Aufzeichnungsschicht 50 bis 200 nm (500 bis 2000 Å) beträgt.

4. Optisches Aufzeichnungsmedium nach einem der Ansprüche 1 bis 3, worin feuchtigkeitsbeständige Schichten, die lichtdurchlässig sind, mit einer Wellenlänge von 400 bis 1000 nm auf beiden Oberflächen der Aufzeichnungsschicht vorgesehen sind.

5. Optisches Aufzeichnungsmedium nach Anspruch 4, worin die durchlässigen feuchtigkeitsbeständigen Schichten aus Siliziumdioxid gebildet sind.

6. Verfahren zur Herstellung eines optischen Aufzeichnungsmediums gemäß Anspruch 1, das eine Aufzeichnungsschicht, umfassend Sauerstoff, Tellur, Germanium und Zinn, umfaßt, worin der Anteil an Sauerstoff 20 bis 60 Atom% beträgt und die relativen Anteile an Te, Ge und Sn innerhalb des Polygons GHIJKLMN, das in Fig. 2 der beigefügten Zeichnungen gezeigt wird, liegen, bei dem eine Mischung, enthaltend Tellur, Germanium und Zinn, wobei wenigstens eines dieser Metalle in Form eines Oxids davon vorliegt, Aluminium und, als Festlösungsstabilisator, wenigstens ein Metall aus Kupfer, Zink, Eisen und Nickel, gesintert wird und ein Substrat durch Verdampfungsabscheidung unter Verwendung des gesinterten Produkts als Abscheidungsquelle beschichtet wird.

7. Verfahren nach Anspruch 6, worin das Oxid Tellurdioxid, Germaniumoxid oder Zinnoxid ist.

8. Verfahren nach Anspruch 6 oder 7, worin die Mischung 5 bis 50 Gew.-% des Festlösungsstabilisators enthält.

9. Verfahren nach einem der Ansprüche 6 bis 8, worin die Mischung 10 bis 40 Gew.-% des Festlösungsstabilisators enthält.

10. Verfahren nach einem der Ansprüche 6 bis 9, worin das Gewichtsverhältnis der Summe an Germanium oder des Oxids davon und Zinn oder des Oxids davon zu Aluminium in der Mischung 3 bis 20 beträgt.

11. Verfahren nach einem der Ansprüche 6 bis 10, worin das Gewichtsverhältnis von Tellur oder des Oxids davon zu der Summe an Germanium oder des Oxids davon und Zinn oder des Oxids davon in der Mischung 0,5 bis 2 beträgt.

12. Verfahren nach einem der Ansprüche 6 bis 11, worin die Mischung bei einer Temperatur von 600° bis 720°C gesintert wird.

13. Verfahren nach einem der Ansprüche 6 bis 12, worin die Verdampfungsabscheidung des gesinterten Produkts durch Widerstandsheizen oder Elektronenstrahlabscheidung bewirkt wird.

**Revendications**

1. Médium d'enregistrement optique constitué d'une couche d'enregistrement comprenant de l'oxygène, du tellure et du germanium et de l'étain, caractérisé en ce que la proportion d'oxygène est de 20 à 60 atomes % et en ce que les proportions relatives de Te, Ge et Sn sont situées à l'intérieur du polygone GHIJKLMN indiqué sur la Figure 2 des dessins joints.

2. Médium d'enregistrement optique selon la revendication 1, dans lequel la proportion d'oxygène est de 30 à 50 atomes %.

3. Médium d'enregistrement optique selon l'une ou l'autre des revendications 1 ou 2, dans lequel l'épaisseur de la couche d'enregistrement est de 50 à 200 nm (500 à 2000 Å).

4. Médium d'enregistrement optique selon l'une quelconque des revendications 1 à 3, dans lequel on prévoit sur les deux surfaces de la couche d'enregistrement des couches résistant à l'humidité, transparentes à la lumière d'une longueur d'onde de 400 à 1000 nm.

5. Médium d'enregistrement optique selon la revendication 4, dans lequel les couches transparentes résistant à l'humidité sont formées de dioxyde de silicium.

6. Procédé de fabrication d'un médium d'enregistrement optique conforme à la revendication 1 et comportant une couche d'enregistrement comprenant de l'oxygène, du tellure, du germanium et de l'étain, étant précisé que la proportion d'oxygène est de 20 à 60 atomes % et que les proportions relatives de Te, Ge et Sn sont situées à l'intérieur du polygone GHIJKLMN représenté sur la Figure 2 des dessins joints, procédé qui consiste à fritter un mélange contenant du tellure, du germanium et de l'étain dont l'un au moins de ces métaux est présent sous la forme de l'un de ses oxydes, de l'aluminium et, comme stabilisateur de la solution solide, au moins un des métaux cuivre, zinc fer et nickel, puis à revêtir un substrat par dépôt par métallisation sous vide en utilisant le produit fritté comme source de dépôt.

7. Procédé selon la revendication 6, dans lequel l'oxyde est le dioxyde de tellure, l'oxyde de germanium ou l'oxyde d'étain.

8. Procédé selon la revendication 6 ou 7, dans lequel le mélange contient 5 à 50% en poids du stabilisateur de la solution solide.

9. Procédé selon l'une quelconque des revendications 6 à 8, dans lequel le mélange contient 10 à 40% en poids du stabilisateur de la solution solide.

10. Procédé selon l'une quelconque des revendications 6 à 9, dans lequel le rapport entre le poids total du germanium ou de son oxyde et de l'étain ou de son oxyde et le poids de l'aluminium dans le mélange est de 3 à 20.

11. Procédé selon l'une quelconque des revendications 6 à 10, dans lequel le rapport entre le poids du tellure ou de son oxyde et le poids total du germanium ou de son oxyde et de l'étain ou de son oxyde, dans le mélange, est de 0.5 à 2.

12. Procédé selon l'une quelconque des revendications 6 à 11, dans lequel le mélange est fritté à une température allant de 600°C à 720°C.

13. Procédé selon l'une quelconque des revendications 6 à 12, dans lequel le dépôt par métallisation sous vide du produit fritté se fait par chauffage par résistance ou par dépôt par faisceau électronique.

FIG.1.

FIG.2.

Fig. 3.

Fig. 4.

Fig.5.

Fig.6.

FIG.7.

FIG.8.